# EUROPÄISCHE PATENTSCHRIFT

(11) **EP 0 619 790 B1**
(45) Veröffentlichungstag und Bekanntmachung des Hinweises auf die Patenterteilung: **03.09.1997**
(21) Anmeldenummer: 93923434.0
(22) Anmeldetag: 04.11.1993
(51) Int. Cl.: B62J 15/02, B62J 7/04

(54) **VORRICHTUNG ZUM BEFESTIGEN AN EINEM GESTELL EINES ZWEIRADFAHRZEUGS**
DEVICE FOR SECURING TO THE FRAME OF A TWO-WHEELED VEHICLE
DISPOSITIF A FIXER SUR LE CADRE D'UN VEHICULE A DEUX ROUES

(30) Priorität: 06.11.1992 CH 3445/92; 24.02.1993 CH 562/93
(43) Veröffentlichungstag der Anmeldung: 19.10.1994
(73) Patentinhaber: RINDLISBACHER, Ulrich, CH-3136 Seftigen (CH)
(72) Erfinder: RINDLISBACHER, Ulrich, CH-3136 Seftigen (CH)
(74) Vertreter: Roshardt, Werner Alfred, Dipl.-Phys.
(86) Internationale Anmeldenummer: CH9300253
(87) Internationale Veröffentlichungsnummer: WO9411234

(56) Entgegenhaltungen:
- DE-A- 3 231 015
- DE-U- 8 534 180
- DE-U- 9 001 570
- FR-A- 1 534 010
- GB-A- 2 229 978
- US-A- 4 948 020

## Beschreibung

Die Erfindung betrifft eine am Gestell eines Zweiradfahrzeugs befestigbare Vorrichtung gemäß dem Oberbegriff des Patentanspruchs 1.

Aus der GB-A 2 229 978, DE-U 90 01 570 und der DE-U 85 34 180 sind abnehmbare bzw. wegklappbare Schutzbleche bekannt und aus der US-A 4 948 020 eine wegklappbare Gepäckablage. Ferner ist aus der FR-A 1 534 010 eine als Einkaufswagen verwendbare und vom Zweirad abnehmbare Gepäckablage bekannt. Diese bekannte Gepäckablage ist unabhängig von einem eventuellen Schutzblech angeordnet. Ein u. a. als Radabdeckung dienendes einstückiges Teil mit einem verschließbaren Behälter, welches gleichzeitig das Hinterrad aufnimmt und hält, ist aus der DE-A 32 31 015 bekannt.

Die GB-A 2 229 978, FR-A 1 534 010, DE-U 85 34 180 und US-A 4 948 020 weisen Schnellverbindungseinrichtungen für eine am Gestell eines Zweiradfahrzeugs über deren Laufrädern anzubringende Vorrichtungen auf; die GB-A 2 229 978 sowie die DE-U 85 34 180 befassen sich mit Schutzblechen und die FR-A 1 534 010 sowie die US-A 4 948 020 mit Gepäckablagen. Bei der GB-A 2 229 978 sind Schutzblech und Gepäckablage ein einziges identisches Element. Dieses Element kann über den Sattel geklappt werden und schützt diesen dann vor Regen.

Es hat sich nun gezeigt, daß die Wirkungsweise der bekannten Vorrichtungen, insbesondere bei einer des öfteren zu verstellenden Sattelhöhe, zu wünschen übrig läßt.

Hier versucht die Erfindung (wie im Anspruch 1 definiert ist) Abhilfe zu schaffen. Auch wird durch das Ausnützen des Raums zwischen der Gepäckauflage und dem Schutzblech dem Radfahrer weiterer Stauraum bzw. ein Behältnis angeboten, in dem entweder für die Betriebssicherheit des Fahrrades notwendige Einrichtungen oder kleine Gegenstände, wie Werkzeug etc., untergebracht werden können.

Durch die erfindungsgemäße Vorrichtung mit einer Gepäckablage, einem Schutzblech und einer Schnellverbindungseinrichtung für deren Befestigung am Gestell des Zweiradfahrzeugs ist es dessen Benützer möglich, sein Fahrzeug schnell von dieser Vorrichtung zu befreien, falls er es z. B. bei einem Fahrrad als Sportrad unter Vermeidung unnötiger Luftverwirbelungen verwenden möchte. Es ist ihm ferner möglich, bei einer Sattelhöhenverstellung, welche bei sportlichen Touren des öfteren angezeigt ist oder bei der Verwendung des Fahrrads von unterschiedlich großen Personen, sofort Schutzblech und/oder Gepäckträger in der Höhe anzupassen, da ja die Sattelstütze mit dem Sattel in der Höhe verschoben wird. Unter Schutzblech wird jegliche Schmutzabdeckung über einem Rad verstanden.

Die Vorrichtung ist als Bausatz ausgebildet. Hierdurch sind eine Vielzahl von Kombinationsmöglichkeiten vom Benützer selbst herstellbar:
- Gepäckträger mit Schutzblech und Behälter ohne Leuchte bzw. Rückstrahler,
- Gepäckträger mit Schutzblech, Behälter und Leuchte bzw. Rückstrahler,
- Zweirad ohne Gepäckträger, ohne Schutzblech, ohne Verbindungselement, nur mit Halteteil und aufgesteckter Leuchte bzw. Rückstrahler.

Als weiteren Vorteil in einer bevorzugten Ausführungsform sind die Einsätze in den Backen zur Adaptation der Backenauflagefläche für unterschiedliche Gestellquerschnitte anzusehen. Definitionsgemäß wird dem Gestell sowohl der Rahmen wie auch die Sattelstütze, die Gabel und der Gabelschaft zugerechnet. Durch die Verwendung der Einsätze kann nur eine einzige Grundausstattung für die unterschiedlichsten Fahrradtypen hergestellt werden. Die notwendigen Anpassungen erfolgen dann über die verhältnismäßig preisgünstigen Einsätze. Auch steht hierdurch dem Anbau an beliebige Fahrräder nichts mehr im Wege.

Durch die vorteilhafte Ausgestaltung des Spannmittels der Schnellverbindungseinrichtung mit einem Handgriff, läßt sich eine Höhenverstellung sowie ein An- und Abbau innerhalb kürzester Zeit ohne Verwendung von Werkzeugen durchführen.

Durch die vorteilhafte Ausgestaltung des Zwischenraums zwischen der Gepäckablage und dem Schutzblech als Behälter bei einer weiteren Ausführungsvariante ist zusätzlicher Stauraum gewonnen worden, der bei den bekannten Fahrrädern bis jetzt verschenkt wurde. In diesen Stauraum lassen sich vorteilhaft Beleuchtungs- oder Rückstrahlelemente einbauen. Ebenfalls können hierin die hierfür notwendigen Energieträger untergebracht werden.

Es kann auch dieser Behälter in vorteilhafter Weise mit einer verschließbaren Seitenklappe versehen werden.

Ferner kann in einer weiteren Ausführungsvariante eine Leuchte bzw. ein Rückstrahler auswechselbar aufgesteckt werden. Durch die bevorzugte gleiche Ausgestaltung von Kupplungspaaren für das am Gestell angeordnete Halteteil und das Verbindungselement sowie für die Rückleuchte bzw. den Rückstrahler an der Gepäckauflage bzw. dem Schutzblech, kann die Rückleuchte bzw. der Rückstrahler auch am Halteteil bei mitverwendeter Gepäckauflage bzw. Schutzblech angesteckt werden. Die hierdurch erreichte Gewichtsreduktion erweitert die Verwendung des Zweirads als Renn- und/oder Trainingszweirad.

Im folgenden werden Ausführungsbeispiele der erfindungsgemäßen Vorrichtung anhand von Zeichnungen näher erläutert. Es zeigen:
- Fig. 1: ein Fahrrad mit einer an der Sattelstütze sowie an der Gabel befestigten, einen Gepäckträger, ein Schutzblech und einen Behälter aufweisenden Vorrichtung,
- Fig. 2: eine Seitenansicht einer Schnellverbindungseinrichtung der Vorrichtung im nicht angebauten Zustand,
- Fig. 3: eine Draufsicht auf die in Figur 2 dargestellte Schnellverbindungseinrichtung,
- Fig. 4: eine Draufsicht auf eine Auswahl von Einsätzen für die Backen der Schnellverbindungseinrichtung,
- Fig. 5: eine Seitenansicht einer in die Vorrichtung einsetzbaren Rückleuchte,
- Fig. 6: eine Draufsicht auf den Gepäckträger der Vorrichtung in Blickrichtung VI in Figur 1,
- Fig. 7: eine Draufsicht auf den Gepäckträger der Vorrichtung in Blickrichtung VII in Figur 1, wobei jedoch die Rückleuchte abgenommen ist,
- Fig. 8: eine Draufsicht auf die Gabel des in Figur 1 dargestellten Fahrrads mit einem Aufsatz zur Halterung der Vorrichtung über dem Vorderrad,
- Fig. 9: einen Schnitt entlang der Linie IX - IX in Figur 8 durch den verwendeten Aufsatz, wobei außer der Gabel das Gestell sowie das Vorderrad nicht dargestellt ist, um die Zeichnung nicht zu überladen,
- Fig. 10: eine Seitenansicht einer Variante eines Halteteils der in Figur 2 dargestellten Schnellverbindungseinrichtung,
- Fig. 11: eine Draufsicht des in Figur 10 dargestellten Halteteils,
- Fig. 12: eine Seitenansicht einer Variante eines Verbindungselements der in Figur 2 dargestellten Schnellverbindungseinrichtung,
- Fig. 13: eine Draufsicht des in Figur 12 dargestellten Verbindungselements und
- Fig. 14: eine Seitenansicht der Vorrichtung mit dem in den Figuren 10 und 11 dargestellten Halteteil sowie einem in den Figuren 12 und 13 dargestellten Verbindungselement.

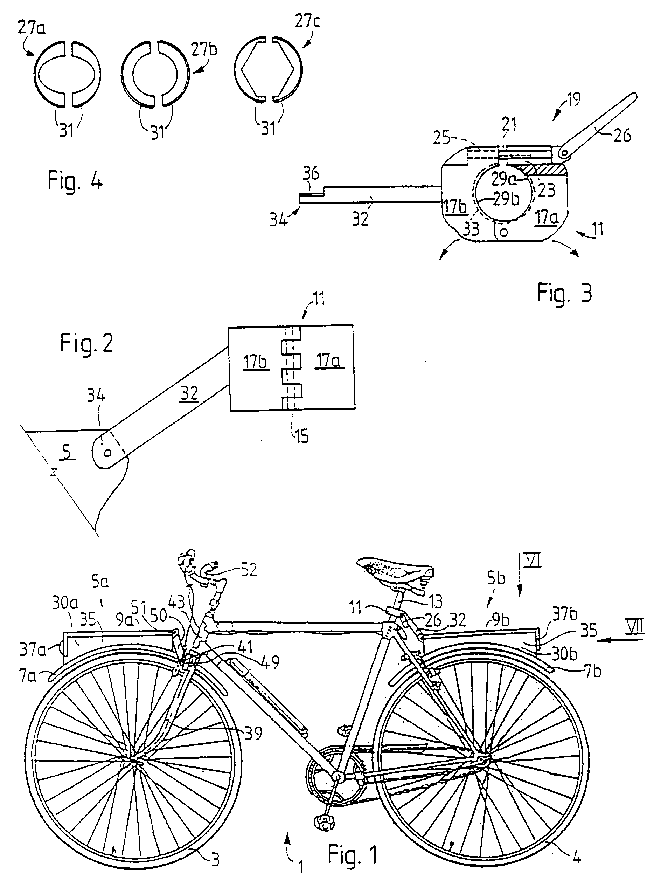

Das in Figur 1 dargestellte Fahrrad 1 als Zweiradfahrzeug hat sowohl über dem Vorder- wie auch über dem Hinterrad 3 bzw. 4 eine Vorrichtung 5a bzw. 5b mit einem Schutzblech 7a bzw. 7b und einer Gepäckablage 9a bzw. 9b, wobei die ein "a" tragenden Bezugszahlen sich jeweils auf die Vorrichtung 5a und die ein "b" tragenden Bezugszahlen sich jeweils auf die Vorrichtung 5b beziehen. Da die Vorrichtung 5a in weiten Bereichen analog zur Vorrichtung 5b ausgebildet ist, wird nachfolgend nur die Vorrichtung 5b über dem Hinterrad 4 beschrieben und später auf die geringfügigen Unterschiede der Vorrichtung 5a eingegangen.

Die Vorrichtung 5b ist mit einer Schnellverbindungseinrichtung, welche als separates Bauteil in den Figuren 2 und 3 in vergrößerter Darstellung gezeigt ist, an der Sattelstütze 13 befestigt. Die Schnellverbindungseinrichtung hat, wie in den Figuren 2 und 3 dargestellt ist, einen Halteteil 11 und ein die Gepäckablage 9 mit dem Halteteil 11 verbindendes Verbindungselement 32. Der Halteteil 11 hat zwei gegeneinander schwenkbare, mit einem Schwenklager 15 zusammengehaltene Backen 17a und 17b, welche mit einem Spannmittel 19 gegeneinander spannbar sind.

Das Spannmittel 19 ist ein Schraubenbolzen 21, der im zusammengeklappten Zustand der Backen 17a und 17b in einer senkrecht zur Achse des Schwenklagers 15 verlaufenden Nut 23 in der Backe 17a liegt und mit seinem Schraubenende in eine Gewindedurchgangsbohrung 25 der Backe 17b eingreift. Am Bolzenkopf ist ein Handhebel 26 als Handgriff schwenkbar gehalten, mit dem der Schraubenbolzen 21 in das Gewinde 25 ohne Verwendung von Werkzeugen einschraubbar ist. Die beiden Backen 17a und 17b können soweit aufgeklappt werden, daß der Halteteil 11 mühelos auf den betreffenden Gestellteil gesteckt oder abgenommen werden kann.

In die Backen 17a und 17b sind Einsätze 27 zur Adaptation der Backenauflageflächen 29a und 29b an unterschiedliche Gestellquerschnittsformen eingesetzt. Eine Auswahl möglicher Einsätze 27a, 27b und 27c für z. B. eine ovale, eine runde und eine sechseckige Gestellquerschnittsform sind in Figur 4 dargestellt. Selbstverständlich können weitere Adaptationen an andere Gestellquerschnittsformen vorgenommen werden. Die Einsätze 27 sind mit einer Schwalbenschwanzführung 31/33 an den Backen 17a und 17b in deren Backenauflageflächen 29a und 29b eingesetzt und gehalten. Vorzugsweise wird der Steg 31 der Schwalbenschwanzführung an den Einsätzen 27 und die dazu passende Nut 33 in den Backenauflageflächen 29a und 29b angeordnet, damit die Backen 17a und 17b auch ohne eingesetzte Einsätze 27 verwendbar sind.

Anstelle die Einsätze 27a, 27b und 27c zweiteilig auszubilden, können sie auch geschlitzt, einteilig aus elastischem aufbiegbarem Material, insbesondere Kunststoff hergestellt werden. Obige Schwalbenschwanzführung 31/33 ist dann durch eine nicht dargestellte Nut-und-Feder-Führung ersetzt. Diese nicht dargestellten Einsätze werden dann aufgebogen und auf den betreffenden Gestellteil gesteckt. Sie klammern infolge ihrer elastischen Spannkraft leicht am Gestellteil und können beliebig in der Höhe verschoben werden. Unverrückbar fest werden sie dann erst durch das Halteteil 11 angepreßt. Da diese Einsätze einteilig sind, können die einzelnen Einsatzhälften nicht mehr verloren gehen.

An dem Halteteil 11 ist ein schräg nach unten gerichtetes, stangen- oder plattenförmiges Verbindungselement 32 angeordnet, welches an seinem dem Halteteil 11 abgewandten Ende eine gerasterte Hälfte 34 einer Schwenkeinrichtung aufweist, welche mit einer nicht explizit dargestellten, ebenfalls gerasterten hierzu passenden anderen, an der Vorrichtung 5b angeordneten Hälfte verschraubbar ist. Durch die Rasterung 36 ist eine lagestabile Verbindung möglich, wodurch die Vorrichtung 5b gegen ein Verschwenken durch Fahrerschütterungen gesichert ist. Beide Hälften 34 sind voneinander vollständig trennbar. Die beiden Hälften der Schwenkeinrichtung werden mit einer nicht explizit dargestellten Schraube als Achse und Spannmittel zusammengehalten. Damit ein Lösen der Schraube durch Erschütterungen nicht möglich ist, ist entweder an der Schraubenkopfauflage oder an der Auflagefläche der die Schraube spannenden Mutter oder an beiden eine Rasterung vorgesehen. An der betreffenden Auflagefläche am Gepäckträger ist ebenfalls eine hierzu passende Rasterung vorgesehen.

Die Befestigung des Schutzblechs 7 am Gepäckträger 9 ist als Behälter 35 mit zwei Seitenwänden 30a und 30b ausgebildet. Der Behälter 35 ist innen hohl, wobei der Innenraum wenigstens von einer Seite von außen zugänglich ist. Die zugängliche Seite kann entweder mit einer Seitenwand teilweise verschlossen sein, so daß eingelegte Gegenstände nicht herausfallen können oder mit einer verschließbaren Klappe versehen sein. Als zugängliche Seiten können die dem Halteteil 11 abgewendete Seite oder eine oder beide Längsseiten ausgebildet sein. Auch kann die unten beschriebene Leuchte 37a bzw. die Rückleuchte 37b gleichzeitig als aufsteckbarer Verschluß dienen.

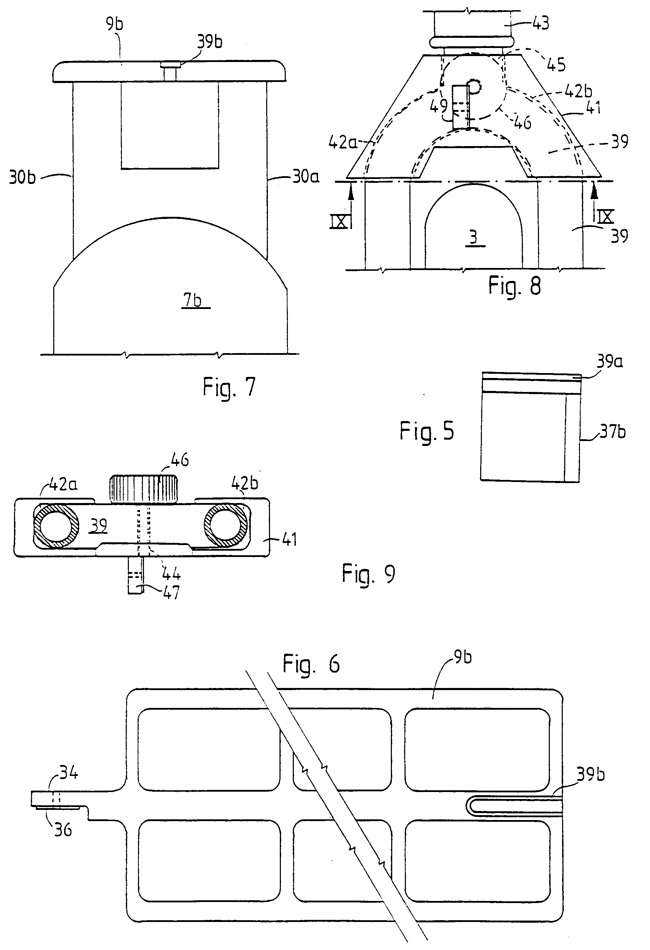

In die dem Halteteil 11 abgewandte Behälterseite kann auch ein Scheinwerfer 37a als Leuchte eingebaut werden, sofern die Vorrichtung 5a über dem Vorderrad 3 angebaut wird oder eine Rückleuchte 37b oder ein Rückstrahler eingebaut werden, sofern die Vorrichtung 5b über dem Hinterrad 4 angebaut wird. Die in Figur 5 dargestellte Rückleuchte 37b ist mit einer Schwalbenschwanzführung 39a ausgerüstet, mit der sie in das betreffende Gegenstück 39b im Gepäckträger 9b, wie in Figur 6 dargestellt, einschiebbar ist. Ein Schnappverschluß, welcher ein Herausfallen der eingeschobenen Rückleuchte verhindern soll, ist nicht explizit dargestellt.

Der Gepäckträger 9a bzw. 9b besitzt einerseits aus Gewichtsersparnisgründen eine gerippte bzw. unterbrochene Oberfläche und ist andererseits, wie auch die anderen Bauteile aus Kunststoff, insbesondere glasfaserverstärktem Kunststoff gefertigt. Als Kunststoffe werden u. a. Polyamid, Polyäthylen, etc. mit und ohne Faserverstärkung verwendet. Anstelle von Kunststoff können selbstverständlich auch andere Materialien verwendet werden, wie z. B. Metalle, welche dann bevorzugt im Spritzgußverfahren (z. B. Aluminiumspritzguß) verarbeitet werden.

Die Halterung der Vorrichtung 5a über dem Vorderrad 3 erfolgt, wie in Figur 1 dargestellt, am Oberteil der Gabel 39 mit einem in den Figuren 8 und 9 dargestellten, V-förmigen Aufsatz 41, welcher von oben auf die Gabel 39 gesteckt ist. Der Aufsatz 41 hat zwei in seinen Schenkeln verlaufende, dem Gabelprofil angepaßte Ausnehmungen 42a und 42b sowie eine dem Profil des Steuerrohrs 43 des Gestells angepaßte Ausnehmung 45. Durch eine nicht dargestellte, serienmäßig vorhandene Durchgangsbohrung im Gabeloberteil greift eine Rändelschraube 46 in ein Gewindeloch 44 des Aufsatzes 41. An der der Ausnehmung 45 abgewandten Seite des Aufsatzes 41 ist eine Hälfte 47 einer zur Schwenkeinrichtung 34 analog ausgebildeten Schwenkeinrichtung 49 ausgebildet. In diese Hälfte 47 greift, wie in Figur 1 dargestellt, die andere Hälfte der Schwenkeinrichtung 49 eines Verbindungselements 50, an der dann der Gepäckträger 9a angeordnet ist. Eine Schwenkeinrichtung 51 zwischen Gepäckträger 9a und Verbindungselement 50 ist analog zur Schwenkeinrichtung 34 ausgebildet. Das Verbindungselement 50 unterscheidet sich somit gegenüber dem Verbindungselement 32 durch je eine Kupplungshälfte einer Schwenkeinrichtung, wohingegen das Verbindungselement 34 fest mit der Schnellverbindungseinrichtung 11 verbunden ist. Die Vorrichtung 5a ist auf einfache Art und Weise schnell montierbar, jedoch nicht derart schnell, wie diejenige über dem Hinterrad, was auch nicht von Nöten ist, da nur eine Anpassung an den betreffenden Fahrradtyp notwendig ist.

Anstelle des Schraubenbolzens 21 kann auch ein nicht dargestellter Bajonettverschluß für die Schnellverbindungseinrichtung oder ein federbelasteter Verschluß verwendet werden.

Die Vorrichtung kann auch bei anderen Zweiradfahrzeugen, wie z. B. Töffs, Motorrädern, Mopeds (Motorveloziped), etc., verwendet werden.

Das Verbindungselement 32 kann auch ausziehbar gestaltet werden, wobei dann die jeweils ausgezogene Länge über eine nicht dargestellte Klemmschraube oder ein nicht dargestelltes konisches Klemmgewinde fixierbar ist. Hierdurch kann die Auswahl von Befestigungsorten am Gestell signifikant erhöht werden.

Anstelle das Verbindungselement 32a bzw. 50 mittels dem Schwenkgelenk 34 bzw. 51 am Gepäckträger 9a bzw. 9b zu befestigen, kann eine nicht dargestellte Haltestrebe verwendet werden, an der dann der Gepäcktäger 9a bzw. 9b, das Schutzblech 7a bzw. 7b bzw. der Behälter 35 durch Einklinken, Anschrauben, etc. gehalten sind. Durch diese Anordnung ist es möglich, auch nur das Schutzblech anzubringen.

Zur Erhöhung der Verstell- und Adaptationsmöglichkeiten kann ein weiteres nicht dargestelltes Schwenkgelenk mit Rasterung an der Schnellverbindungseinrichtung für das Verbindungselement 32 analog zur Ausführung der Vorrichtung 5a vorgesehen werden.

Anstelle das Verbindungselement 32 bzw. 50 fest oder mit einem Schwenkgelenk 49 mit dem Halteteil 11 bzw. mit dem Aufsatz 41 zu verbinden, kann auch eine annähernd horizontal verlaufende Schwalbenschwanzführung vorgesehen werden, in welche das Verbindungselement 32 bzw. 50 eingeschoben wird und auch hier, analog der Schalbenschwanzkonstruktion 39a/39b an Leuchte 37a und Rückstrahler 37b, kann ein Schnappverschluß vorgesehen werden, welcher ein Herausfallen verhindert.

Diese Schwalbenschwanzführung wird vorteilhafterweise passend zur Schwalbenschwanzführung 39a/39b der Leuchte 37a und des Rückstrahler 37b ausgeführt. Hierdurch erhöhen sich nämlich die Variationsmöglichkeiten des unten beschriebenen Bausatzes, in dem zusätzlich nur die Leuchte 37a bzw. der Rückstrahler 37b, ohne Gepäckträger 9a bzw. 9b, Schutzblech 7a bzw. 7b und Behälter 35 am Gestell befestigbar ist.

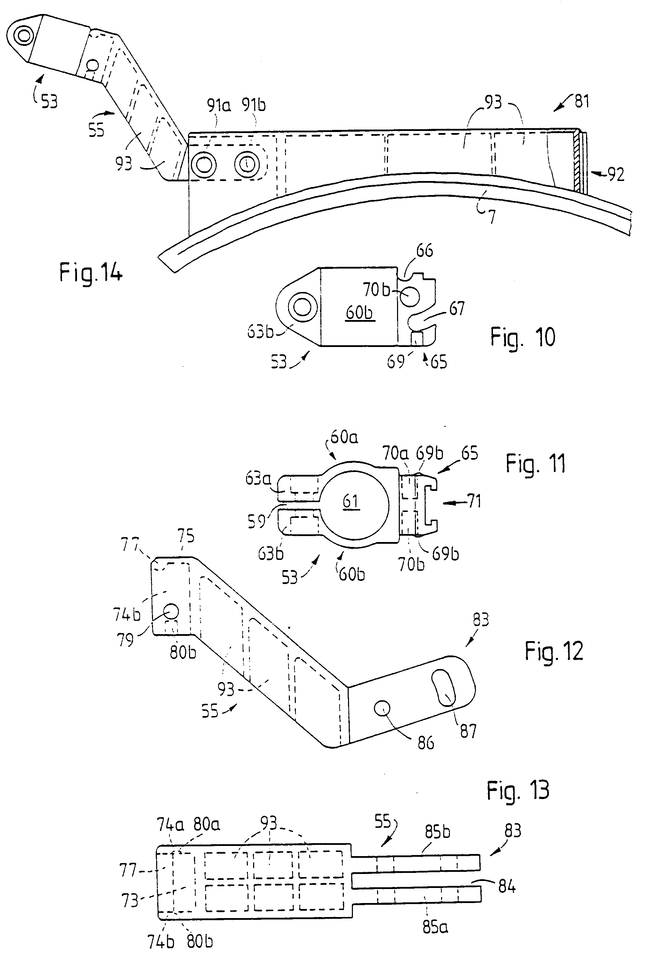

Eine weitere vorteilhafte Ausgestaltung eines Halteteils 53 und einem hierzu passenden Verbindungselement 55 sind in den Figuren 10 bis 13 sowie angebaut an einem Gepäckträger 81, in Figur 14 dargestellt.

Das in einer Seitenansicht in Figur 10 und in einer Draufsicht in Figur 11 dargestellte Halteteil 53 ist aus elastischem Kunststoff mit einem Schlitz 59, der ein Aufbiegen der beiden Backen 60a und 60b gestattet, hergestellt. Der Schlitz 59 mündet in eine typischen Gestellrahmendurchmessern angepaßte Durchgangsbohrung 61. In diese Durchgangsbohrung sind zur Anpassung an spezielle Gestellrahmendurchmesser die oben beschriebenen Einsätze 27a, 27b und 27c einsetzbar, wobei deren Schwalbenschwanzführungen 31 in eine Nut-und-Feder-Führung abgeändert sind. Die hierzu passende Nut befindet sich dann in der Durchgangsbohrung 61. Die den Schlitz 59 seitlich begrenzenden Schlitzflansche 63a und 63b sind durchbrochen und können mit einer Schraube und Mutter zusammengezogen werden. Anstelle Schraube und Mutter kann auch ein Bajonettverschluß verwendet werden.

An der dem Schlitz 59 gegenüberliegenden Seite hat der Halteteil 53 einen Einsteckteil 65. Der Einsteckteil 65 weist an seiner Oberseite eine senkrecht zur Mittellinie der Durchgangsbohrung 61 verlaufende halbrunde Aussparung 66 sowie im unteren Bereich einen nach oben geschwungenen Einlauf 67 auf. Zwischen Einlaufende und dem unteren Ende des Einsteckteils 65 sind zwei parallel zur Mittellinie der Durchgangsbohrung 61 verlaufende, gewölbte zylinderförmige Nocken 69a und 69b angeordnet. Oberhalb des Einlaufs 67, beidseits auf den Seitenflächen des Einsteckteils 65 angeordnete Sacklöcher 70a und 70b dienen nur der Gewichtsersparnis des Halteteils 53. An der freien Stirnseite 71 ist ein parallel zur Mittellinie der Durchgangsbohrung 61 verlaufender erster Teil 73a einer Schwalbenschwanzführung angeordnet. In diesen ersten Teil 73a ist eine Rückleuchte mit einem hierzu passenden, nicht dargestellten zweiten Kupplungsteil einsteckbar.

Das Verbindungselement 55 hat an seinem einen Ende, wie in einer Seitenansicht in Figur 12 und in einer Draufsicht in Figur 13 dargestellt, einen zum Einsteckteil 65 des Halteteils 53 passenden buchsenartigen Innenraum 55. Der Innenraum 73 ist nach unten offen und beidseits durch Haltebacken 74a und 74b sowie eine obere Abdeckung 75, welche beide Haltebacken 74a und 74b miteinander verbindet, begrenzt. An der Vorderkante der Abdeckung 75 ist senkrecht zu den Haltebackenoberflächen verlaufend eine halbrunde, in den Innenraum 73 vorstehende Einhängenase 77 angeordnet. Die Form der Einhängenase 77 ist passend zur Aussparung 66 ausgebildet und dient dazu, das Verbindungselement klappbar bzw. schwenkbar mit dem Halteteil 53 zu verbinden. Im unteren Bereich der Haltebacken 74a und 74b sind durch beide Haltebacken 74a und 74b verlaufende Durchgangsbohrungen 79 angeordnet, welche bei in die Aussparung 66 eingehängter Einhängenase 77 mit dem freien Teil des Einlaufs 67 des Halteteils 53 fluchtet. Unterhalb sind passend zu den Nocken 69a und 69b in den Haltebackenoberflächen zwei Ausnehmungen 80a und 80b angeordnet. Durch die Durchgangsbohrungen 79 ist eine nicht dargestellte, mit einem Handhebel versehene, exzentrische, bolzenartige Spannvorrichtung zum Zusammenziehen der beiden Haltebacken 74a und 74b um einen Klemmweg eingesteckt. Der Bolzendurchmesser ist um eine Spieltoleranz kleiner gewählt als die Breite des Einlaufs 67 des Halteteils 53.

Zum Zusammenbau des Verbindungselements 55 mit dem Halteteil 53 wird die Einhängenase 77 des Verbindungselements 55 in die Aussparung 66 des Halteteils 53 gelegt und das Verbindungselement 55 nach unten geklappt, worauf sich der Bolzen der Spannvorrichtung im Verbindungselement im Einlauf 67 entlang bewegt, bis die Nocken 69a und 69b und die hierzu passenden Ausnehmungen 80a und 80b einschnappen. Anschließend wird die Spannvorrichtung angezogen, worauf Halteteil 53 und Verbindungselement 55 fest miteinander verbunden sind.

Entgegengesetzt dem zur Verbindung mit dem Halteteil 53 vorgesehenen Ende des Verbindungselements 55 hat das zur Verbindung mit dem Gepäckträger 81 vorgesehene Ende 83 zwei mittels eines Freiraums 84 voneinander distanzierte, plattenförmige, eine Steckbuchse bildende Backen 85a und 85b. Beide Backen 85a und 85b sind mit einer Durchgangsbohrung 86 und einem durchgehenden Längsschlitz 87 durchbrochen. Die Backen 85a und 85b werden, wie in Figur 14 zu sehen, beim Anbau des Gepäckträgers 81 an das Verbindungselement 55 in einen Freiraum 89 an seiner Stirnseite gesteckt, anschließend eine Schraube 91a durch die Durchgangsbohrung 86 und eine andere Schraube 91b durch den Längsschlitz 87 gesteckt und beide Schrauben 91a und 91b angezogen, wodurch der Gepäckträger 81 fest mit dem Verbindungselement 55 verbunden ist. Aufgrund des Längsschlitzes 87 ist der Gepäckträger 81 gegenüber dem Verbindungselement 55 um einen Winkelbereich schwenkbar und durch Anziehen der Schrauben 91a und 91b in dieser eingestellten Schwenklage fixierbar. Am der Kupplung mit dem Verbindungselement 55 entgegengesetzten Seite des Gepäckträgers 81 ist eine Schwalbenschwanzführung 92 mit einer Verklinkung für eine aufsteckbare Rückleuchte angebracht.

Zur Gewichtsersparnis von Verbindungselement 55 und Gepäckträger 81 werden, soweit es die Konstruktion erlaubt, Hohlräume 93 vorgesehen.

Anstelle der obenbeschriebenen horizontalen Schwalbenschwanzführungen können auch vertikale Schwalbenschwanzführungen an der Leuchte 37a, der Rückleuchte 37b, dem Gepäckträger 9a bzw. 9b, der Schnellverbindungseinrichtung und dem Aufsatz 41 verwendet werden.

Zur Erhöhung der Tragstabilität für die Vorrichtung 5a bzw. 5b kann eine nicht dargestellte Abstützung am Gestell in der Nähe der Radnaben vorgesehen werden.

Anstelle die Schnellverbindungseinrichtung mit zwei aufklappbaren Backen zu versehen, können auch zwei nicht dargestellte Platten verwendet werden, welche mit einem bzw. mit einem festen und einem verstellbaren Spannmittel gegeneinander mit einem Gestellteil kraftschlüssig einklemmend verspannt werden. Eine derartige Schnellverbindungseinrichtung ist überall dort angezeigt, wo der Gestellbereich z. B. aus zwei Gestellstreben besteht.

Der in den Figuren 1, 6 und 14 dargestellte Gepäckträger 9a, 9b und 81 weist eine plane Ablagefläche für einen mit ihm zu transportierenden (nicht dargestellten) Gegenstand auf. Damit dieser Gegenstand während der Fahrt nicht vom Gepäckträger rutschen kann, wird ein sog. Gummizug zur Halterung verwendet. Dieser handelsübliche Gummizug besteht aus einem in sich geschlossenen Gummiband, am dem drei hakenförmige Klammern angeordnet sind. Zwei dieser Klammern können nun an den Querrippen, welche durch die Hohlräume 93 voneinander trennt sind, oder an der vorderen Querrippe eingehängt, dann die beiden Teilstränge des Gummibandes über den auf dem Gepäckträger liegenden Gegenstand gespannt und das Gummiband dann mit der dritten Klammer bevorzugt an der hinteren Querrippe des Gepäckträgers eingehängt werden.

Anstatt ein Gummiband als Befestigungsmittel zu verwenden, kann auch ein nicht dargestellter Befestigungsbügel mit zwei in die Querrippen einhängbaren Nasen über den zu haltenden Gegenstand geklappt werden. Damit der Bügel mit einer Kraft selbständig auf den Gegenstand drückbar ist, wird über den Bügel in einem Abstand von den Nasen z. B. ein in sich geschlossenes Gummiband geführt, dessen anderes Schlaufenende um das hintere Ende des Gepäckträgers gezogen wird. Der Bügel wirkt dann als einarmiger, um die Nasen schwenkbarer Hebel, der durch die elastische Kraft des Gummibandes gegen den Gegenstand gepreßt wird, um diesen auf der Oberfläche des Gepäckträgers zu halten.

Anstatt den Gepäckträger mit einer planen Auflagefläche zu versehen, kann auch eine nach unten "eingebeulte" Oberfläche erzeugt werden. In dieser Mulde würde dann der zu tranportierende Gegenstand legbar sein. Durch diese Muldenform im Zusammenhang mit der Anpreßkraft des Gummizuges bzw. des Bügels wäre gegenüber der planen Auflagefläche eine verbesserte Verschiebesicherung für den Gegenstand gegeben.

Die einzelnen Bauteile der Vorrichtung sind als Bausatz ausgebildet und können vom Benützer des Fahrrads 1 je nach Belieben derart zusammengestellt werden, daß die Schnellverbindungseinrichtung mit dem
- Gepäckträger mit Schutzblech und Behälter ohne Leuchte bzw. Rückstrahler,
- Gebäckträger mit Schutzblech, Behälter und Leuchte bzw. Rückstrahler,
- Zweirad ohne Gepäckträger, ohne Schutzblech ohne Verbindungselement, nur mit Halteteil und aufgesteckter Leuchte bzw. Rückstrahler.
verwendbar ist

## Patentansprüche

1. Am Gestell **(13)** eines Zweiradfahrzeugs **(1)** über einem der Laufräder **(3, 4)** befestigbare Vorrichtung **(5a, 5b) gekennzeichnet durch**
eine Gepäckablage **(9a, 9b; 81)**, ein Schutzblech **(7a, 7b)** und eine Schnellverbindungseinrichtung **(11, 32; 53, 55)**, welche als Bauteile eines Bausatzes ausgebildet sind, wobei
die Gepäckablage **(9a, 9b; 81)** mit der Schnellverbindungseinrichtung **(11, 32; 53, 55)** am Gestell **(13)** befestigbar ist und
das Schutzblech **(7a, 7b)** an der Gepäckablage **(9a, 9b; 81)** befestigt ist.

2. Vorrichtung nach Anspruch 1, **dadurch gekennzeichnet**, daß
die Schnellverbindungseinrichtung **(11, 32; 53, 55)** einen zwei gegeneinander spannbare Backen **(17a, 17b; 63a, 63b)** aufweisenden Halteteil **(11; 53)** hat, welcher
in seiner Lage positioniert und fixiert am Gestell **(13)** anbringbar ist.

3. Vorrichtung nach Anspruch 2, **gekennzeichnet durch**
in die Backen **(17a, 17b; 63a, 63b)** einsetzbare und auch in deren geöffnetem Zustand in diesen gehaltene Einsätze **(27a - c)** zur Adaption der Backenauflagefläche **(29a, 29b)** an unterschiedliche Gestellquerschnittsformen.

4. Vorrichtung nach Anspruch 2 oder 3, **dadurch gekennzeichnet**, daß
die Schnellverbindungseinrichtung **(11, 32; 53, 55)** ein Verbindungsteil **(32; 55**) aufweist, mit dem der Halteteil **(11)** mit der Gepäckablage **(9a, 9b; 81)** derart verbindbar ist, daß
die Neigung der Gepäckablage **(9a, 9b; 81)** gegenüber dem Befestigungsort des Halteteils **(11; 53)** am Gestell **(13)** einstellbar ist.

5. Vorrichtung, insbesondere nach einem der Ansprüche 1 bis 4, **gekennzeichnet durch**
einen den Gepäckträger **(9a, 9b)** und das Schutzblech **(7a, 7b)** verbindenden Behälter **(35)**.

6. Vorrichtung nach Anspruch 2**, gekennzeichnet durch**
ein in das Halteteil **(53)** mit einer Einklappbewegung einhängbares Verbindungsteil **(55)**, welches
die Gepäckablage **(81)** fest mit dem Halteteil **(53)** verbindet.

7. Vorrichtung nach Anspruch 6, **dadurch gekennzeichnet**, daß
das Halteteil **(53)** und das Verbindungsteil **(55)** ein zueinander passendes erstes Kupplungspaar **(65, 73, 74a, 74b, 77)**,
das Kupplungspaar einen Kupplungsteil mit einer Einhängenase **(77)** als Klappachse und das andere Kupplungsteil eine mit der Nase zusammenwirkende Aussparung **(66)** als Klappachsenführung und
eines der Kupplungsteile einander gegenüberliegende buchsenförmige Haltebacken **(74a, 74b)** zum zur Klappachse seitlichen Halten eines steckerförmigen Einsteckteils **(65)** des anderen Kupplungsteils aufweist.

8. Vorrichtung nach Anspruch 7, **gekennzeichnet durch**
ein an den Kupplungsteilen angeordnetes Rastelementpaar **(69a, 69b, 80a, 80b)**, welches
am Ende des Einklappvorgangs des Verbindungsteils **(55)** in das Halteteil **(53)** einrastet und
mit einer, insbesondere die Haltebacken **(74a, 74b)** gegen den Einsteckteil **(65)** pressenden Klemmvorrichtung, gegen Ausrasten sicherbar ist.

9. Vorrichtung nach einem der Ansprüche 1 bis 8, **gekennzeichnet durch**
eine bzw. einen an der der Schnellverbindungseinrichtung **(11, 32; 53, 55)** abgewandten, freien Außenseite der Gepäckablage angeordnete einsteckbare Leuchte **(37a)** oder Rückstrahler **(37b)**, welche insbesondere mittels eines zweiten Kupplungspaares steckbar sind.

10. Vorrichtung nach Anspruch 7 und 9, **dadurch gekennzeichnet**, daß
die Kupplungsteile des ersten und des zweiten Kupplungspaares zueinander passend ausgebildet sind, damit die Leuchte **(37a)** oder der Rückstrahler wahlweise an der Gepäckablage **(9a, 9b; 81)** oder am Halteteil **(53)** aufsteckbar ist.

## Claims

1. Device (5a, 5b) which can be attached to the frame structure (13) of a two-wheeled vehicle (1) above one of the running wheels (3, 4) **characterised by**
a luggage repository (9a, 9b; 81), a mudguard (7a, 7b) and a high-speed connecting arrangement (11, 32; 53, 55), which are constructed as structural parts of a structural unit, wherein
the luggage repository (9a, 9b; 81) can be attached, together with the high-speed connecting arrangement (11, 32; 53, 55), to the frame structure (13) and
the mudguard (7a, 7b) is attached to the luggage repository (9a, 9b; 81).

2. Device according to claim 1, **characterised in that**
the high-speed connecting arrangement (11, 32; 53, 55) has a holding part (11; 53) having two jaws (17a, 17b; 63a, 63b) capable of being clamped in relation to one another, which holding device
can be fitted so as to be positioned in its position and fixed to the frame structure (13).

3. Device according to claim 2, **characterised by**
inserts (27a - c), which can be inserted in the jaws (17a, 17b; 63a, 63b) and are also held in the said jaws, when the latter are in their open condition, for adapting the bearing surface (29a, 29b) of the jaws to different cross-sectional shapes of the frame structure.

4. Device according to claim 2 or 3, **characterised in that**
the high-speed connecting arrangement (11, 32; 53, 55) has a connecting part (32; 55), with the aid of which the holding part (11) can be connected to the luggage repository (9a, 9b; 81) in such a way that the inclination of the said luggage repository (9a, 9b; 81) can be adjusted in relation to the point of attachment of the holding part (11, 53) to the frame structure (13).

5. Device, in particular according to one of claims 1 to 4, **characterised by**
a receptacle (35) connecting the luggage carrier (9a, 9b) and the mudguard (7a, 7b).

6. Device according to claim 2, **characterised by**
a connecting part (55) which can be hooked into the holding part (53) with a folding-in movement and which
connects the luggage repository (81) fixedly to the holding part (53).

7. Device according to claim 6, **characterised in that**
the holding part (53) and the connecting part (55) have a first pair of couplings (65, 73, 74a, 74b, 77) which fit one another,
the pair of couplings has one coupling part with a hook-in nose (77) as the folding axis and the other coupling part has a recess (66), which interacts with the said nose, as a folding axis guide, and one of the coupling parts has socket-shaped holding jaws (74a, 74b) for holding, sideways in relation to the folding axis, a plug-shaped plug-in cart (65) on the other coupling part.

8. Device according to claim 7, **characterised by**
a pair of notching elements (69a, 69b, 80a, 80b) which is disposed on the coupling parts and which
engages into the holding part (53) at the end of the operation of folding in the connecting part (55) and
can be secured against disengaging with the aid of a gripping device which presses, in particular, the holding jaws (74a, 74b) against the plug-in part (65).

9. Device according to one of claims 1 to 8, **characterised by**
a lamp (37a) or reflector (37b) which can be plugged in and is disposed on that unobstructed outer side of the luggage repository which is averted from the high-speed connecting arrangement (11, 32; 53, 55), which lamp or reflector can be plugged in, in particular by means of a second pair of couplings.

10. Device according to claim 7 and 9, **characterised in that**
the coupling parts of the first and second pair of couplings are constructed so as to fit one another, so that the lamp (37a) or the reflector can be optionally slipped on, either on the luggage repository (9a, 9b; 81) or on the holding part (53).

## Revendications

1. Dispositif (5a, 5b) pouvant être fixé sur le cadre (13) d'un véhicule à deux roues (1), par-dessus l'une de ces roues (3, 4), caractérisé par
un porte-bagages (9a, 9b; 81), un garde-boue (7a, 7b) et un système de connexion rapide (11, 32; 53, 55), qui constituent les composants d'un kit,
le porte-bagages (9a, 9b; 81) pouvant être fixé au cadre (13) avec le système de connexion rapide (11, 32; 53, 55) et
le garde-boue (7a, 7b) étant fixé au porte-bagages (9a, 9b; 81).

2. Dispositif selon la revendication 1, caractérisé en ce que
le système de connexion rapide (11, 32; 53, 55) comporte une pièce de fixation (11; 53) présentant deux mâchoires (17a, 17b; 63a, 63b) pouvant être serrées l'une contre l'autre, cette pièce pouvant être montée sur le cadre (13) de manière à être positionnée en place et immobilisée.

3. Dispositif selon la revendication 2, caractérisé par des pièces d'insertion (27a - c) insérables dans les mâchoires (17a, 17b; 63a, 63b) et maintenues dans celles-ci même dans leur état ouvert, pour adapter la surface d'appui de ces mâchoires (29a, 29b) à des formes de profil de cadre différentes, en section transversale.

4. Dispositif selon la revendication 2 ou 3, caractérisé en ce que
le système de connexion rapide (11, 32; 53, 55) comporte une pièce de solidarisation (32; 55) avec laquelle elle peut être reliée au porte-bagages (9a, 9b; 81) de telle sorte que l'inclinaison de ce porte-bagages (9a, 9b; 81), puisse être ajustée en fonction de l'endroit de la liaison de la pièce de fixation (11; 53) avec le cadre (13).

5. Dispositif, en particulier selon l'une quelconque des revendications 1 à 4, caractérisé par
un compartiment (35) reliant le porte-bagages (9a, 9b) et le garde-boue (7a, 7b).

6. Dispositif selon la revendication 2, caractérisé par une pièce de solidarisation (55) pouvant être accrochée avec la pièce de fixation (53) avec un mouvement de repliement, cette pièce de solidarisation reliant fermement le porte-bagages (81) à la pièce de fixation (53).

7. Dispositif selon la revendication 6, caractérisé en ce que
la pièce de fixation (53) et la pièce de solidarisation (55) présentent une première paire d'accouplement, en correspondance mutuelle (65, 73, 74a, 74b, 77),
cette paire présentant une pièce d'accouplement avec un nez d'accrochage (77) servant d'axe de repliement, l'autre pièce d'accouplement présentant un évidement (66) coopérant avec le nez pour guider l'axe de repliement,
l'une des pièces d'accouplement présentant des mâchoires de fixation (74a, 74b) en forme de douilles l'une en face de l'autre, pour fixer latéralement, par rapport à l'axe de repliement, une pièce d'insertion (65) en prise avec l'autre pièce d'accouplement.

8. Dispositif selon la revendication 7, caractérisé par une paire d'éléments à crans (69a, 69b, 80a, 80b), disposée sur les pièces d'accouplement,
s'encliquètant dans la pièce de fixation (53) à la fin du processus de repliement de la pièce de solidarisation (55) et
pouvant être protégée contre un désencliquetage au moyen d'un dispositif de serrage, pressant en particulier les mâchoires de fixation (74a, 74b) contre la pièce d'insertion (65).

9. Dispositif selon l'une quelconque des revendications 1 à 8, caractérisé par
une lampe (37a) ou un réflecteur (37b), disposés du côté extérieur libre du porte-bagages, opposés au système de connexion rapide (11, 32; 53, 55), et enfichables en particulier au moyen d'une deuxième paire d'accouplement.

10. Dispositif selon les revendications 7 et 9, caractérisé en ce que
les pièces de la première et de la deuxième paires d'accouplement sont formées de manière à se correspondre, afin que la lampe (37a) ou le réflecteur puissent être enfichés au choix sur le porte-bagages (9a, 9b; 81) ou sur la pièce de fixation (53).
